# Europäisches Patentamt
# European Patent Office
# Office européen des brevets

(11) Publication number: **0 063 007**
**B1**

(12) **EUROPEAN PATENT SPECIFICATION**

(45) Date of publication of patent specification: **12.09.84**

(51) Int. Cl.³: **F 16 L 59/02, F 16 L 59/14, F 27 D 1/12**

(21) Application number: **82301725.6**

(22) Date of filing: **01.04.82**

(54) Assembly for insulating a pipe.

(30) Priority: **13.04.81 US 253463**

(43) Date of publication of application:
**20.10.82 Bulletin 82/42**

(45) Publication of the grant of the patent:
**12.09.84 Bulletin 84/37**

(84) Designated Contracting States:
**AT BE CH DE FR GB IT LI LU NL SE**

(56) References cited:
**DE-B-2 354 883**
**GB-A-1 438 544**

(73) Proprietor: **Cameron Iron Works, Inc.**
**P.O. Box 1212**
**Houston Texas 77251 (US)**

(72) Inventor: **Campbell, Frank, Jr.**
**6923 Ashmore Drive**
**Houston Texas 77069 (US)**

(74) Representative: **Lucas, Brian Ronald**
**Lucas, George & Co. 135 Westhall Road**
**Warlingham Surrey CR3 9HJ (GB)**

Courier Press, Leamington Spa, England.

## Description

This invention relates to an assembly for insulating a pipe.

In a metallurgical reheat furnace, metal workpieces are pushed or walked through the furnace and are supported by a series of skid pipes. In a pusher furnace, a complex network of vertical and horizontal watercooled pipes supports the skid pipes over which the pieces are pushed. Because the heat flow from the furnace into the watercooled pipe structure is forever lost, it is essential to maintain an effective insulation around the pipe network. The down time for a furnance undergoing repairs is a recurring and expensive operation; therefore, it is most desirable to have an insulator which can quickly and easily be applied around the skid pipe, cross pipe or vertical pipe. Moreover, it is desirable that the insulator be secured to the pipe without requiring complicated technology, time-consuming welding of studs to the pipe and the tedious and time-consuming effort of aligning recesses in insulators with the welded pipe studs. Finally, it is essential that the insulator remains on the support member as long as possible.

It is known from DE—B2—2 354 883 to provide separate insulating segments which are secured together to surround a pipe by means of interengaging hooks at the ends of members positioned within the insulation.

According to the present invention there is provided an assembly for insulating a pipe, which assembly comprises a pair of insulator segments characterized in that:

(a) said insulator segments are connected to one another by at least one resilient brace which maintains said insulator segments in spaced apart relationship but will flex to enable said insulator segments to be mounted on a pipe;

(b) each insulator segment is provided with a locking surface adjacent the brace, which surfaces, when said assembly is viewed from one end, extend from and converge in a direction away from said brace; and said assembly further comprising locking means which, in use, is mounted between said locking surfaces to inhibit flexing of the braces and thus to secure said insulator segments around said pipe.

Preferably, the brace is exposed to the interior surfaces of the insulator segments to, in use, enhance the heat flow from the brace into said pipe.

Advantageously, the locking means comprises an elongate locking plug having a top and a pair of converging sides which are slidingly and conformingly received by and abut the brace and converging locking surfaces respectively thereby providing a mechanical lock to secure the insulator segments at a single location around the pipe. Preferably, a plurality of tines are disposed between the top and the converging sides of the elongate locking plug. Advantageously, the elongate locking plug has an end with a tab to facilitate the sliding of the elongate locking plug between the brace and converging upper locking surfaces.

Preferably, the locking means is substantially covered by an insulator filler.

Advantageously, each insulator segment is also provided with a surface which, when said assembly is viewed from one end, diverge from the ends of said locking surfaces remote from said brace.

For a better understanding of the present invention reference will now be made, by way of example, to the accompanying drawings in which:

Figure 1 is an exploded view in perspective of one embodiment of an assembly in accordance with the present invention suitable for insulating the bottom and sides of a truncated triangular skid pipe;

Figure 2 is a view, in cross section, showing the assembly of Figure 1 being applied to a truncated triangular skid pipe;

Figure 3 is an isometric view of the assembly shown in Figures 1 and 2 after the insulator segments have been applied to the truncated triangular skid pipe, the locking plug has been slidably inserted between the converging upper locking surfaces of the insulator segments, and the refractory mortar has been applied to the diverging lower surfaces of the insulator segments and the interior of the locking plug;

Figure 4 is a sectional elevational view taken along lines 4—4 of Figure 1 showing the locking plug, the tabs at either end of the locking plug, and a plurality of projecting tines therein;

Figure 5 is a detailed view showing the relationship of the spaced apart upper locking surfaces of the insulator segments, the resilient brace, the diverging lower surfaces of the insulator segments and the inserted locking plug filled with the refractory mortar;

Figure 6 is an isometric view of the resilient brace removed from the insulator segments and further showing the securing prongs on the brace;

Figure 7 is a cross sectional view of another embodiment of the present invention mounted on a round skid pipe;

Figure 8 is a cross sectional view of yet another embodiment of the present invention mounted on a round pipe in which the locking plug is situated on top of the pipe;

Figure 9 is a view in cross section of yet another embodiment of the present invention mounted on a truncated triangular pipe in which the locking plug is situated on top of the pipe; and

Figure 10 is a modification of the embodiment of Figure 9 in which a void is located between the base of the pipe and the insulator segments.

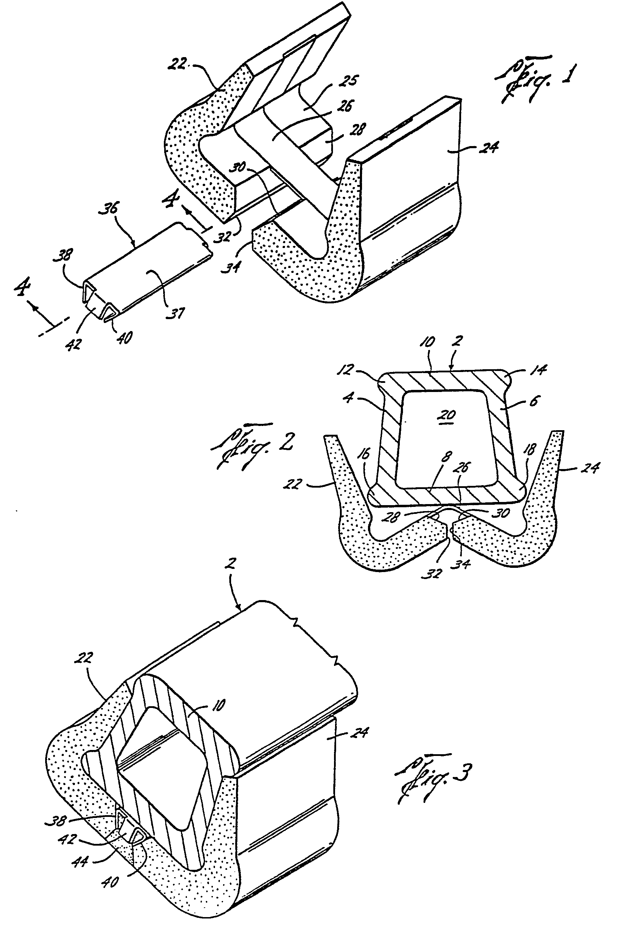

Referring to Figure 1, a pair of insulator segments 22, 24 having interior surfaces 25 are spaced apart from one another by a resilient brace 26. The brace 26 (as fully shown in Figure 6) includes a plurality of prongs 48 which are embedded in the insulator segments 22, 24 in order to secure the segments 22, 24 to the brace 26. The resilient brace 26 is shaped to conform generally with the particular shape of the insulator segments and the pipe which has to be insulated. For example, the resilient brace 60 in Figure 7 is arcuate in order to conform with the insulator segments 50 and 52 and the round pipe 54.

Each insulator segment 22, 24 is provided with an upper locking surface 28, 30. The upper locking surfaces 28, 30 are held in spaced apart relationship to one another by brace 26 and extend from the brace 26 and converge toward one another in a direction away from the brace. Each insulator segment 22, 24 is also provided with a pair of lower surfaces 32, 34. The lower surfaces 32, 34 are held in spaced apart relationship to one another and diverge from one another as they extend from the upper locking surfaces 28, 30 respectively.

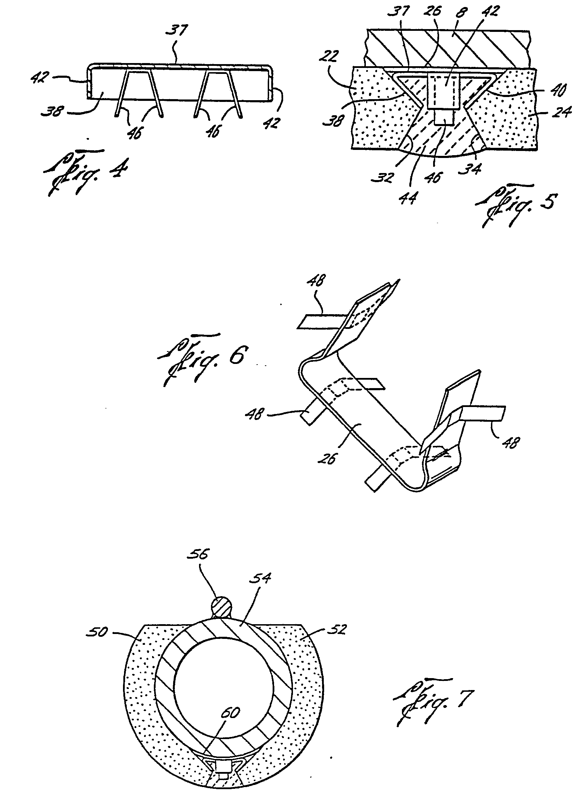

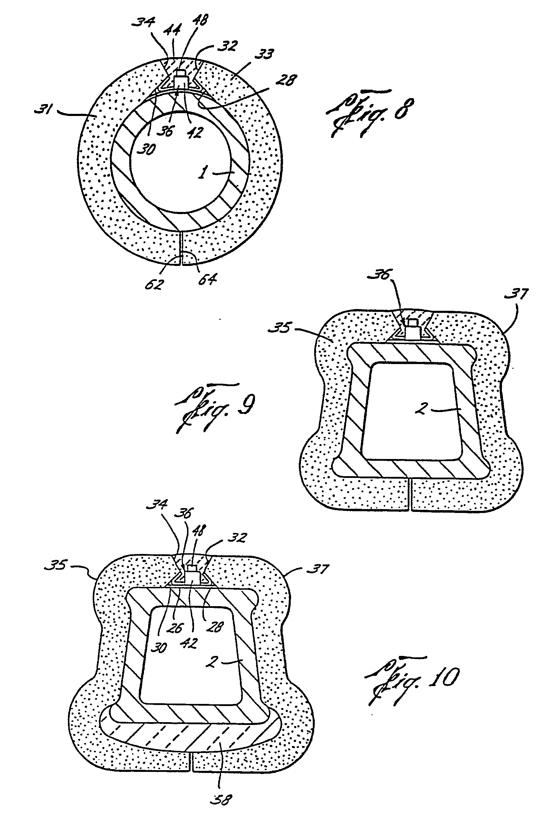

A locking plug 36 has a top 37 and a pair of converging sides 38, 40. As shown in Figure 5, the converging sides leave an exposed volume therein which communicates with the space between the diverging lower surfaces 32, 34. The top 37 and converging sides 38, 40 of the locking plug 36 are slidingly received in the space between the brace 26 and the upper locking surfaces 28 and 30 respectively. A tab 42 can be placed on either or both ends of the locking plug 36 in order to facilitate insertion of the locking plug 36. When the locking plug 36 is in proper position, the sides 38, 40 abut the upper locking surfaces 28, 30 respectively thereby urging them outwardly from one another. The result is that the insulator segments 22, 24 are placed in conforming configuration around the truncated triangular skid pipe 10 and are mechanically locked at a single location in this configuration by the interaction of the locking plug 36 with the brace 26 and upper locking surfaces 28, 30. In operation, the embodiment of Figure 1 is applied to the truncated triangular skid pipe 10 as shown in Figure 2. It should be understood that there is sufficient clearance between the insulator segments 22, 24 to enable the insulator segments 22, 24 to be applied over the nodes 16, 18 of the truncated triangular skid pipe 10.

After the insulator segments 22, 24 are applied to the truncated triangular skid pipe 10, the locking plug 36 is inserted as shown in Figure 3. Then a suitable insulator filler such as a refractory mortar 44 is applied into the volume between the converging sides 38, 40 and within the diverging lower surfaces 32, 34. The tines 46 supports the refractory mortar 44 after the mortar hardens. Thus, the locking plug 36 is effectively shielded from the hot corrosive gases of the furnace.

Figure 5 shows an expanded view of the refractory mortar 44 effectively filling the volume between the converging sides 38, 40, the top 37 and the diverging lower surfaces 32, 34.

Figure 7 shows an assembly in accordance with the present invention applied to a more conventional round skid pipe 54 having a skid 56 on its top. The arcuate insulator segments 50, 52 and the arcuate resilient brace 60 accommodate the round pipe 54 as shown.

Assemblies in accordance with the present invention can also be used with insulator segments which form a complete covering of the pipe as in the case of a cross pipe or vertical pipe. For example, Figure 8 shows a round pipe 1 covered by a pair of arcuate insulator segments 31, 33. The upper locking surfaces 28, 30 perform the same function as previously described, as do the locking plug 36 and the diverging lower surfaces 32, 34. The locking plug is located on top of the pipe 1 in this configuration because the margins 62, 64 would permit the migration of slag therein if they were allowed to be on top. The mortar 44, however, reduces this problem as shown in Figure 8.

Figures 9 and 10 show insulator segments 35, 37 for use with a truncated triangular pipe 2 used as a cross pipe or a vertical pipe in the same manner as the embodiment of Figure 8. Again, the locking plug 36 is located on top of the pipe 2 for the same reasons as described for Figure 8. In Figure 10 a void 58 can be left vacant or filled with an additional insulator if desired. Furthermore, if this embodiment were locked from the bottom instead of at the top, the void 58 would render the insulator segments 35, 37 easier to apply around the pipe 2.

The resilient brace 26 preferably is exposed to the interior surface 25 of the insulator segments 22, 24 so that the heat imparted to the brace 26 from the furnace is easily transferred to the support member 2 having a water coolant flowing through the passageway 20.

It will be noted that the resilient metallic locking member 36, when urged against the upper locking surfaces 28, 30 will simultaneously lock the insulator segments around the pipe 10 while at the same time urging them into close conformity therewith.

In all embodiments shown, the insulator segments can be locked around their particular pipe by applying a single locking plug 36 to a single location between the insulator segments. The insulator segments, therefore, can be applied anywhere along the support structure without the use of additional support structure.

## Claims

1. An assembly for insulating a pipe (10), which assembly comprises a pair of insulator segments (22, 24) characterized in that:
   (a) said insulator segments (22, 24) are connected to one another by at least one resilient brace (26) which maintains said insulator segments in spaced apart relationship but will flex to enable said insulator segments (22, 24) to be mounted on a pipe (10);
   (b) each insulator segment (22, 24) is provided with a locking surface (28, 30) adjacent the brace, which surfaces, when said assembly is viewed from one end, extend from the converge in a direction away from said brace (26); and
said assembly further comprising locking means (36) which, in use, is mounted between said locking surfaces (28, 30) to inhibit flexing of the brace (26) and thus to secure said insulator segments (22, 24) around said pipe (10).

2. An assembly according to Claim 1, characterized in that said brace (26) is exposed to the interior surfaces of the insulator segments (22, 24) to, in use, enhance the heat flow from the brace (26) into said pipe (10).

3. An assembly according to Claim 1 or 2, characterized in that said locking means comprises an elongate locking plug (36) having a top (37) and a pair of converging sides (38, 40) which are slidingly and conformingly received by and abut the brace (26) and converging locking surfaces (28, 30) respectively thereby providing a mechanical lock to secure the insulator segments (22, 24) at a single location around the pipe (10).

4. An assembly according to Claim 3, characterized in that a plurality of tines (46) are disposed between the top (37) and the converging sides (38, 40) of the elongate locking plug (36).

5. An assembly according to Claim 3 or 4, characterized in that the elongate locking plug (36) has an end with a tab (42) to facilitate the sliding of the elongate locking plug (36) between the brace (26) and converging upper locking surfaces (28, 30).

6. An assembly according to any preceding Claim, characterized in that said locking means is substantially covered by an insulator filler (44).

7. An assembly according to any preceding Claim, characterized in that each insulator segment (22, 24) is also provided with a surface (32, 34) which, when said assembly is viewed from one end, diverge from the ends of said locking surfaces remote from said brace (26).

## Patentansprüche

1. Rohrisolierung mit einem Paar Isolierungssegmenten, dadurch gekennzeichnet, daß
a) die Isolierungssegmente (22, 24) miteinander mittels mindestens einer federnden Klammer (26) verbunden sind, die die Isolierungssegmente (22, 24) im Abstand zueinander hält, dabei jedoch so biegbar ist, daß die Isolierungssegmente (22, 24) an einem Rohr (10) befestigt werden können;
   b) jedes Isolierungssegment (22, 24) mit einer benachbart zur Klammer (26) angeordneten Verschlußfläche (28, 30) versehen ist, wobei die Verschlußflächen (28, 30), gesehen vom Ende der Rohrisolierung, sich von der Klammer (26) weg konvergierend erstrecken, und
   c) die Rohrisolierung weiter eine Verschlußeinrichtung umfaßt, die im montierten Zustand zwischen den Verschlußflächen (28, 30) zum Verhindern eines Durchbiegens der Klammer (26) und somit zur sicheren Festlegung der Isolierungssegmente (22, 24) rings um das Rohr (10) befestigt ist.

2. Rohrisolierung nach Anspruch 1, dadurch gekennzeichnet, daß die Klammer (26) an den Innenflächen der Isolierungssegmente (22, 24) zur Verbesserung des Wärmeflusses von der Klammer (26) in das Rohr (10) hinein angeordnet ist.

3. Rohrisolierung nach Anspruch 1 oder 2, dadurch gekennzeichnet, daß die Verschlußeinrichtung ein Längliches Verschlußteil (36) mit einer Oberseite (37) und einem Paar konvergierender Seiten (38, 40) umfaßt, wobei die Seiten gleitend und konform zwischen den konvergierenden Verschlußflächen (28, 30) bzw. der Klammer (26) aufgenommen werden und gegen dieselben anliegen, wodurch eine mechanische Sperre zur sicheren Festlegung der Isolierungssegmente (22, 24) an einer einzigen Stelle rings um das Rohr (10) ausgebildet wird.

4. Rohrisolierung nach Anspruch 3, dadurch gekennzeichnet, daß zwischen der Oberseite (37) und den konvergierenden Seiten (38, 40) des länglichen Verschlußteils (36) mehrere Zinken (46) ausgebildet sind.

5. Rohrisolierung nach Anspruch 3 oder 4, dadurch gekennzeichnet, daß das längliche Verschlußteil (36) zum leichteren Einschieben zwischen die Klammer (26) und die konvergierenden oberen Verschlußflächen (28, 29) ein Ende mit einer Lasche (42) aufweist.

6. Rohrisolierung nach einem der Ansprüche 1 bis 5, dadurch gekennzeichnet, daß die Verschlußeinrichtung im wesentlichen von einem Isolierfüllmaterial (44) abgedeckt ist.

7. Rohrisolierung nach einem der Ansprüche 1 bis 6, dadurch gekennzeichnet, daß jedes Isolierungselement (22, 24) ebenfalls mit einer Fläche (32, 34) versehen ist, die, gesehen von einem Ende der Rohrisolierung, von den von der Klammer (26) entfernten Enden der Verschlußflächen (28, 30) divergieren.

## Revendications

1. Assemblage pour l'isolation d'un tuyau (10), lequel assemblage comprend une paire de segments d'isolateur (22, 24), caractérisé en ce que:

(a) lesdits segments (22, 24) de l'isolateur sont reliés l'un à l'autre par au moins une entretoise élastique (26) qui maintient lesdits segments de l'isolateur à l'état espacé mais qui se plie pour permettre auxdits segments (22, 24) de l'isolateur d'être montés sur un tuyau (10);

(b) chaque segment (22, 24) de l'isolateur est muni d'une surface de blocage (28, 30) adjacente à l'entretoise, lesquelles surfaces, quand ledit assemblage est vu à partir d'une extrémité, s'étendent à partir de ladite entretoise (26) et convergent dans une direction s'éloignant de cette dernière; et

en ce que ledit assemblage comprend en outre des moyens de blocage (36) qui, en utilisation, sont montés entre lesdites surfaces de blocage (28, 30) pour inhiber la flexion de l'entretoise (26) et fixer ainsi lesdits segments (22, 24) de l'isolateur autour dudit tuyau (10).

2. Assemblage selon la revendication 1, caractérisé en ce que l'entretoise (26) est exposée vers les surfaces intérieures des segments (22, 24) de l'isolateur pour augmenter, en utilisation, le courant thermique allant de l'entretoise (26) audit tuyau (10).

3. Assemblage selon la revendication 1 ou 2, caractérisé en ce que lesdits moyens de blocage comprennent un bouchon de blocage allongé (36) possédant une partie supérieure (37) et une paire de côtes convergents (38, 40), qui sont reçus de façon coulissante et par concordance de formes dans l'entretoise (26) dans laquelle ils viennent buter et des surfaces de blocage convergentes (28, 30) respectivement, ce qui détermine un blocage méchanique pour fixer les segments (22, 24) de l'isolateur en un unique emplacement autour du tuyau (10).

4. Assemblage selon la revendication 3, caractérisé en ce que plusieurs dents (46) sont disposées entre la partie supérieure (37) et les côtés convergents (38, 40) du bouchon de blocage allongé (36).

5. Assemblage selon la revendication 3 ou 4, caractérisé en ce que le bouchon de blocage allongé (36) comprend à une extrémité une patte (42) destinée à faciliter le glisement du bouchon de blocage allongé (36) entre l'entretoise (26) et des surfaces de blocage supérieures et convergentes (28, 30).

6. Assemblage selon l'une quelconque des revendications précédentes, caractérisé en ce que les moyens de blocage sont sensiblement recouverts par une matière de remplissage isolante (44).

7. Assemblage selon l'une quelconque des revendications précédentes, caractérisé en ce que chaque segment (22, 24) de l'isolateur est également muni d'une surface (32, 34) qui, quand ledit assemblage est vu à partir d'une extrémité, diverge à partir des extrémités desdites surfaces de blocage qui sont éloignées de ladite entretoise (26).

Fig. 1

Fig. 2

Fig. 3

Fig. 4

Fig. 5

Fig. 6

Fig. 7

Fig. 8

Fig. 9

Fig. 10